(19) Europäisches Patentamt

European Patent Office

Office européen des brevets

(11) Numéro de publication : **0 412 888 B1**

(12) **FASCICULE DE BREVET EUROPEEN**

(45) Date de publication du fascicule du brevet :
**22.06.94 Bulletin 94/25**

(21) Numéro de dépôt : **90402238.1**

(22) Date de dépôt : **03.08.90**

(51) Int. Cl.⁵ : **C08L 77/00,** C09D 5/46,
C08L 77/02, C09D 177/02,
// (C08L77/00, 63:00),
(C08L77/02, 63:00),
(C08L77/00, 81:00),
(C08L77/02, 81:00),
(C09D177/02, 181:00)

(54) Compositions thermoplastiques en poudre à base de polyamide et/ou de polyéther-esteramide, leur procédé de préparation et leur utilisation pour le revêtement de substrats métalliques.

(30) Priorité : **11.08.89 FR 8910832**

(43) Date de publication de la demande :
**13.02.91 Bulletin 91/07**

(45) Mention de la délivrance du brevet :
**22.06.94 Bulletin 94/25**

(84) Etats contractants désignés :
**AT BE CH DE DK ES FR GB GR IT LI LU NL SE**

(56) Documents cités :
**CHEMICAL ABSTRACTS, vol. 80, no. 12, 25
mars 1974, page 73, résumé no. 61147b,
Columbus, Ohio, US; & JP-A-73 71 425**

(73) Titulaire : **ELF ATOCHEM S.A.
4 & 8, Cours Michelet
La Défense 10
F-92800 Puteaux (FR)**

(72) Inventeur : **Merval, Jean-Paul
3, rue de Valleville
F-27300 Brionne (FR)**
Inventeur : **Perraud, Eric
Chemin des Bruyères
F-27470 Fontaine L'Abbé (FR)**
Inventeur : **Rennie, Stephen
13, Brougham Road
Acton, London W3 (GB)**

EP 0 412 888 B1

## Description

La présente invention concerne de nouvelles compositions thermoplastiques en poudre à base de polyamide et/ou de polyétheresteramide, pouvant être notamment utilisées pour le revêtement de substrats métalliques sans qu'un primaire d'adhérence soit nécessaire.

Les polyamides sont couramment utilisés pour le revêtement des substrats métalliques, en raison notamment de leurs bonnes propriétés mécaniques telles que résistance à l'abrasion, au choc..., inertie chimique vis-à-vis de nombres produits tels que les hydrocarbures, les bases, les acides minéraux ... .

Mais il est connu que l'adhérence des polyamides sur les métal est insuffisante par suite d'une mauvaise mouillabilité à l'état fondu des polyamides qui ne leur permet pas de bien pénétrer dans les rugosités et interstices du métal afin d'acquérir une adhérence d'ordre mécanique. D'autre part, lorsqu'on réalise un dépôt régulier de poudre de polyamide sur toute une surface métallique et que l'on porte ce dépôt à la fusion à la température appropriée, le film de polyamide fondu se rétracte et se rassemble en gouttelettes qui peuvent tomber du support métallique.

Pour surmonter ce défaut, on enduit le support métallique d'une sous-couche, appelée primaire d'adhérence, destinée à assurer l'accrochage et l'ancrage mécanique de la poudre de polyamide. En général le primaire d'adhérence que l'on utilise est à base de résines thermodurcissables et il est appliqué sous forme de poudre ou en solution ou en suspension dans des solvants organiques.

Il faut donc prévoir des installations supplémentaires pour l'élimination éventuelle des solvants et pour la cuisson du primaire avant l'enduction du substrat ainsi revêtu avec la poudre de polyamide. De plus, la cuisson et/ou le séchage du primaire augmentent de façon non négligeable la durée des opérations de revêtement, et donc leur coût.

Dans le brevet français n° 72 41484, on a proposé des compositions en poudre à base de polyamide contenant des phénols bloqués et ne nécessitant pas l'utilisation de primaire d'adhérence.

Cependant, les conditions de mise en oeuvre sont délicates et ne permettent pas d'obtenir des résultats d'adhérence très performants, bien qu'améliorés.

Les compositions thermoplastiques en poudre à base de polyamide et/ou de polyétheresteramide, objet de la présente invention, possèdent de bonnes propriétés de mouillabilité de substrats métalliques et des résultats d'adhérence très performants et ce, sans primaire d'adhérence. L'art anterieur JP-A-73 71 425 (C.ABSTRACTS Vol 80 n° 12 25 mars 1974 resumé 61 147 b) a decrit des primaires pour peintures formés par (i) une resine de bisphenol A et d'epoxy avec un polyamide ou une resine de bisphenol A et d'epoxy avec une amine ou le melange de (i) et (ii) mais ce ne sont pas des poudres de polyamide

Les compositions thermoplastiques en poudre selon l'invention contiennent un mélange de polyamide et/ou de polyétheresteramide et de résines époxy/sulfonamides aromatiques.

Le rapport pondéral des résines époxy/sulfonamidee au polyamide et/ou polyétheresteramide peut en général varier de 0,5 20 %, et de préférence de 2 à 7 %.

Par polyamide entrant dans la composition thermoplastique en poudre selon l'invention, on entend les polyamides aliphatiques obtenus à partir de lactames ou d'aminoacides dont la chaîne hydrocarbonée possède un nombre d'atomes de carbone compris entre 4 et 20 comme, par exemple, le caprolactame, l'oenantholactame, le dodécalactame, l'undécanolactame, l'acide amino 11-undécanoïque, l'acide amino 12-dodécanoïque, les produits de condensation d'un acide dicarboxylique avec une diamine comme, par exemple, les polyamides 6.6, 6.9, 6.10, 6.12, 9.6, (produits de la condensation de l'hexaméthylène diamine avec l'acide adipique, l'acide azélaïque, l'acide sébacique, l'acide dodécanedioïque-1,12 et de la nonaméthylène diamine avec l'acide adipique), les copolyamides résultant de la polymérisation des divers monomères cités ci-dessus ou les mélanges de plusieurs polyamides cités ci-dessus.

Parmi ces polyamides on citera tout particulièrement :
- le polyamide 11, obtenu par polycondensation de l'acide amino-11 undécanoïque,
- le polyamide 12, obtenu par polycondensation de l'acide amino-12 dodécanoïque ou du dodécanolactame et,
- les copolyamides obtenus par la polymérisation des monomères cités ci-dessus.

D'une manière générale, la viscosité inhérente (mesurée à 20°C pour une solution à 0,5 g pour 100 g de métacrésol) des polyamides peut être comprise entre 0,20 et 2,0, et de préférence entre 0,60 et 1,30 dlg$^{-1}$.

Par polyamide, on entend aussi les polyamides amorphes semi-aromatiques, et notamment tels que définis dans les brevets français FR 1 588 130, 2 324 672 et 2 575 756, dans le brevet européen EP 53 876, dans les brevets japonais 59 015 447 et 60 217 237.

Par polyétheresteramide, on entend aussi bien les polyétheresteramides statistiques (c'est-à-dire formés par l'enchaînement aléatoire des divers constituants monomères) que les polyétheresteramides séquencés c'est-à-dire formés de blocs présentant une certaine longueur de chaîne de leurs divers constituants.

2

Les polyétheresteramides sont des produits de la copolycondensation de séquences polyamides à extrémités réactives avec des séquences polyéthers à extrémités réactives, telles que :

. séquences polyamides à fins de chaîne dicarboxyliques avec des séquences polyétherdiols.

De tels produits ont été décrits par exemple dans les brevets français n° 74 18913 et 77 26678.

La masse moléculaire moyenne en nombre de ces séquences polyamides est généralement comprise entre 500 et 10 000 et plus particulièrement entre 600 et 5 000. Les séquences polyamides des polyétheresteramides sont formées de préférence de polyamide 6, 6.6, 6.12, 11 ou 12 ou de copolyamides résultant de la polycondensation de leurs monomères.

La masse moléculaire moyenne en nombre des polyéthers est comprise généralement entre 200 et 6 000 et plus particulièrement entre 600 et 3 000.

Les séquences polyéthers consistent de préférence en polytétraméthylène glycol (PTMG), polypropylène glycol (PPG), ou polyéthylène glycol (PEG).

La viscosité inhérente des polyétheresteramides est avantageusement comprise entre 0,8 et 2,05, et de préférence entre 0,80 et 1,20.

La viscosité inhérente est mesurée dans le métacrésol à 20°C avec une concentration initiale de 0,5 g pour 100 g de métacrésol. Elle est exprimée en dlg$^{-1}$.

Les polyétheresteramides selon l'invention peuvent être formés de 5 85 % en poids de polyéther, et de 95 à 15 % en poids de polyamide, et de préférence de 30 à 80 % en poids de polyéther et de 70 à 20 % en poids de polyamide.

Les résines époxydes sont des composés solides ou liquides qui comportent au moins une fonction époxyde, seuls ou en mélange.

Les mélanges peuvent être constitués de composés ayant un nombre différent de fonctions époxydes et ont très souvent une fonctionnalité globale (en époxyde) non entière.

Il existe actuellement sur le marché et dans la littérature scientifique et technique un très grand nombre d'exemples de composés organiques répondant à cette définition et dont les structures sont très diverses. Les composés les plus courants sont ceux qui dérivent de la réaction du bisphénol A et de l'épichlorhydrine et, notamment, les composés résultant de l'addition de deux molécules d'épichlorhydrine sur une molécule de bisphénol A (DGEBA). Mais on peut utiliser un grand nombre d'autres résines époxydes telles que celles qui résultent de la fixation d'un groupe époxyde aux deux extrémités d'une chaîne d'hydrocarbure paraffinique (par exemple, des diépoxydes dérivés du butanediol), ou d'une chaîne de polyéther telle que le polypropylène glycol alpha, oméga-diépoxyde. On peut aussi utiliser des composés diépoxydes plus particuliers tels que le dioxyde de vinylcyclohexène, l'époxy-3, 4-cyclohexane-monocarboxylate d'époxy-3,4-cyclohexylméthyle, l'-(époxy-3,4-cyclohexyl)-3-époxy-8,9-dioxa-2,4-Spiro (5.5) undécane, le bis (époxy-2,3-cyclopentyl)-éther, l'adipate de bis(époxy-3,4-méthyl-6--cyclohexyle), le diglycidyléther de résorcinol.

Si l'on souhaite obtenir un matériau final présentant une densité élevée de réticulation, il peut être avantageux d'utiliser des composés époxydes ayant plus de deux fonctions époxydes par molécule, tels que les huiles de soja époxydées, les polyglycidyléthers de résines phénoliques de type novolaque, le triglycidyléther de p-aminophénol ou le tétraglycidyléther de tétra (p-hydroxyphényl)-1,1,2,2-éthane.

Le poids équivalent d'époxy peut en général varier entre 43 et 5000 et de préférence entre 150 et 1000.

Les résines époxydes préférées par la demanderesse sont celles dont la fonctionnalité globale est comprise entre 1,9 et 2,1 et avantageusement égale à 2.

Les composés aromatiques sulfonamides peuvent être choisis parmi les dérivés monosulfonamides du benzène halogéné ou non, tels que le benzène sulfonamide, le nitrobenzène sulfonamide, l'ortho-, méta- ou para-toluène sulfonamide, les amino-alkyl benzène sulfonamides, le naphtalène ou le xylène sulfonamide.

Les résines époxy/sulfonamides selon l'invention peuvent être obtenues par réaction de composés sulfonamides et de composés époxydes.

La proportion des composés époxyde et sulfonamide doit être telle que le nombre de fonctions époxyde soit égal au nombre de fonctions sulfonamide.

Toutefois, pour des raisons de cinétique de réaction et/ou de qualité du produit final on peut être amené à faire varier le rapport stoechiométrique $\dfrac{\text{nombre de fonctions sulfonamide}}{\text{nombre de fonctions époxyde}}$ entre 0,25 et 1 et de préférence entre 0,5 et 1.

Le point de fusion des résines époxy/sulfonamides conformes à l'invention est en général compris entre 50 et 180°C, et leur masse moléculaire moyenne en poids Mw est en général comprise entre 500 et 10 000.

Au mélange décrit ci-dessus, on peut incorporer divers autres constituants tels que des charges, des pigments, des additifs tels que des agents anti-cratère, réducteur, antioxydant...

A titre d'exemples de charges qui peuvent entrer dans la composition selon l'invention, on peut citer, le talc, les carbonates de calcium et de manganèse, les silicates de potassium et d'aluminium.

A titre d'exemples de pigments, on peut citer le dioxyde de titane, le chromate de strontium, le phosphate de zinc, le silicochromate de plomb, le noir de carbone, les oxydes de fer.

Il est possible d'incorporer au mélange constitué de polyamide et/ou de polyétheresteramide et de résines époxy/sulfonsmides divers constituants choisis parmi ceux décrits ci-dessus et dont les proportions respectives restent dans les limites habituellement rencontrées dans le domaine des compositions en poudre à base de polyamide ou de polyétheresteramide pour le revêtement de substrats métalliques. En général on incorpore jusqu'à 100 % en poids desdits constituants.

L'invention a également pour objet plusieurs procédés d'obtention des compositions thermoplastiques en poudre définies plus haut.

Le premier procédé mis au point par la demanderesse consiste :
- à dissoudre la ou les résine(s) époxy/sulfonamide(s) plus brièvement la résine époxy/sulfonamide dans un solvant approprié,
- puis à rajouter à la solution ainsi obtenue la poudre de polyamide, et/ou de polyétheresteramide ou plus brièvement de polyamide.
- et enfin à pratiquer le séchage et le tamisage ou broyage du mélange pour la production d'une composition en poudre à la granulométrie souhaitée.

Toutes ces étapes peuvent être effectuées à température ambiante.

Le solvant dans lequel on dissout la résine époxy/sulfonamide peut être avantageusement choisi parmi les cétones, telles que l'acétone, les esters, ou tout autre solvant dans lequel la solubilité de la résine est élevée et qui peut s'éliminer facilement selon des techniques connues, habituellement mises en oeuvre.

Le second procédé d'obtention de compositions en poudre selon l'invention consiste en un malaxage à l'état fondu de la résine époxy/ sulfonamide avec le polyamide dans un malaxeur de type approprié.

La température de malaxage peut être comprise entre 150 et 300°C, et de préférence entre 170 et 230°C.

Le mélange ainsi obtenu se présente en général sous forme de granulés que l'on broie, selon les techniques habituelles, à la granulométrie souhaitée pour le revêtement de substrats métalliques.

Le troisième procédé mis au point par la demanderesse consiste à mélanger à sec la résine époxy/sulfonamide préalablement broyée finement et la poudre de polyamide. Ce mélange à sec ou dry-blend ne nécessite pas d'appareillage spécial, il peut s'effectuer à température ambiante, il est donc économique, rapide.

Le quatrième procédé d'obtention de compositions en poudre selon l'invention consiste à effectuer une (co)polycondensation des monomères de polyamide en présence de la résine époxy/sulfonamide telle que définie plus haut.

On opère en général à une température comprise entre 150 et 300°C, et de préférence entre 190 et 250°C.

Tout type d'appareil utilisé pour la polycondensation des polyamides peut être avantageusement employé. A titre d'exemple, on peut citer un réacteur équipé d'une agitation d'environ 50 tours/mn, pouvant supporter une pression de 20 bars.

La durée de la polycondensation peut être comprise entre 5 et 15 heures, et de préférence entre 4 et 8 heures.

Lorsque les opérations de copolycondensation sont terminées, on obtient le mélange sous forme de granulés que l'on broie à la granulométrie souhaitée.

D'une manière générale, la granulométrie des poudres conformes à l'invention peut être comprise entre 5 μm et 1 mm.

La présente invention concerne aussi l'utilisation des compositions thermoplastiques en poudre telles que définies précédemment pour le revêtement de substrats métalliques.

Le substrat métallique peut être choisi dans une large gamme de produits. Il peut s'agir de pièces d'acier ordinaire ou galvanisé, de pièces en aluminium ou en alliages d'aluminium. L'épaisseur du substrat métallique peut être quelconque (par exemple de l'ordre du dixième de mm, comme de l'ordre de quelques dizaines de cm).

Selon une technique connue et qui ne constitue pas en elle-même un objet de l'invention, le substrat métallique, et notamment en acier ordinaire, en aluminium ou en alliage d' aluminium présent dans les matériaux conformes à l'invention a pu subir un ou plusieurs des traitements de surface suivants, cette liste n'étant pas limitative :
- dégraissage grossier
- dégraissage alcalin
- brossage
- dégraissage fin
- rinçage à chaud
- dégraissage phosphatant

EP 0 412 888 B1

- phosphatation fer ou zinc
- chromatation
- rinçage à froid
- rinçage chromique.

A titre d'exemples de substrats métalliques aptes à être revêtus avec une composition selon l'invention, on peut citer :

- Acier dégraissé, lisse ou grenaillé,
- Acier dégraissé, phosphaté,
- Acier phosphaté fer ou zinc,
- Acier galvanisé Sendzimir,
- Acier électrozingué,
- Acier galvanisé au bain,
- Acier cataphorèse,
- Acier chromaté,
- Acier anodisé,
- Acier sablé corindon,
- Aluminium dégraissé,
- Aluminium lisse ou grenaillé,
- Aluminium Alodine 1200.

La composition à base de polyamide ou de polyétheresteramide selon l'invention est donc appliquée sous forme de poudre sur le substrat métallique. L'application de la composition en poudre peut s'effectuer selon les techniques d'application habituellement mises en oeuvre.

Le broyage des poudres peut s'effectuer dans des appareils refroidis cryogéniquement ou à forte absorption d'air (broyeurs à couteaux, à marteaux, à disques ...). Les particules de poudre obtenues sont sélectées dans des appareils appropriés pour éliminer des tranches granulométriques non souhaitées : par exemples des grains trop gros et/ou trop fins.

Parmi les techniques d'application de poudre, on peut citer la projection électrostatique, le trempage en lit fluidisé, techniques particulièrement préférées pour réaliser le revêtement de substrats métalliques selon l'invention.

En projection électrostatique, la poudre est introduite dans un pistolet où elle est véhiculée par de l'air comprimé et passe dans une buse portée à un potentiel élevé généralement compris entre une dizaine et une centaine de kilovolts.

La tension appliquée peut être de polarité positive ou négative.

Le débit de la poudre dans le pistolet est généralement compris entre 10 et 200 g/mn, et de préférence entre 50 et 120 g/mn.

Lors de son passage dans la buse, la poudre se charge d'une certaine quantité d'électricité, les particules de poudres véhiculées par l'air comprimé viennent s'appliquer sur la surface métallique à revêtir, ladite surface étant elle-même reliée à la terre c'est-à-dire à un potentiel électrique nul. Les particules de poudre sont retenues sur cette surface par leur charge électrostatique et les forces d'attraction électrostatiques sont suffisantes pour que l'objet poudré puisse être non seulement revêtu de poudre mais également déplacé et chauffé dans un four à une température qui provoque la fusion ou la réticulation des poudres de revêtement.

La polarité de la charge électrostatique à laquelle on porte la poudre peut être, comme on le voit ci-dessus, positive ou négative.

En général, on la choisit en fonction de la nature de la poudre que l'on désire appliquer, qui peut donner de bons résultats avec une polarité d'un certain signe et des résultats moins bons, voire nuls quand la polarité est de signe opposé.

En général, la polarité positive donne de meilleurs résultats pour l'application de poudre de polyamide-11 ou -12 par projection électrostatique.

Cependant la demanderesse a remarqué que pour les compositions en poudre selon l'invention à base de polyamide et contenant de la résine époxy/sulfonamide, les résultats d'adhérence et de qualité du revêtement final sont pratiquement indépendants de la polarité d'application et sont (sensiblement) identiques.

La projection électrostatique des compositions à base de polyamide selon l'invention quelle que soit la polarité d'application présente un avantage certain car on pourra notamment utiliser les installations industrielles standard existantes qui sont conçues pour la projection électrostatique de revêtement en poudre en une seule polarité.

En projection électrostatique, le rapport pondéral préféré de résine époxy/sulfonamide présentes dans le mélange au polyamide est avantageusement compris entre 1,5 et 7,5 %.

En général on peut utiliser une poudre de granulométrie moyenne comprise entre 5 et 100 µm et de pré-

férence entre 5 et 65 µm.

Les revêtements réalisés avec une quelconque des compositions selon l'invention et mises en oeuvre par projection électrostatique possèdent de bonnes propriétés d'adhérence, et un aspect final de bonne qualité et ce, quelle que soit l'épaisseur dudit revêtement comprise entre 40 et 400 µm.

Tel n'est pas le cas pour les revêtements en poudre à base de polyamide seul qui présentent de nombreux défauts d'aspect pour des faibles et des fortes épaisseurs.

Par faibles épaisseurs, on entend des épaisseurs d'environ 40 µm et par fortes épaisseurs, des épaisseurs de l'ordre de 400 µm.

Pour les épaisseurs faibles, un revêtement de polyamide présente par exemple des piqûres ; pour de fortes épaisseurs, il y a d'importants risques de délaminage du revêtement et des bulles et des taupinières de répulsion apparaissent en grand nombre.

Dans le cas du procédé de trempage en lit fluidisé, le substrat métallique à revêtir, soigneusement préparé, en subissant par exemple un ou plusieurs traitements de surface énumérés ci-dessus et de préférence un grenaillage, est chauffé dans un four à une température déterminée suivant notamment la nature dudit substrat, sa forme et l'épaisseur de revêtement désirée. Le substrat ainsi chauffé est ensuite plongé dans une composition de poudre selon l'invention maintenue en suspension par un gaz en circulation dans une cuve à fond poreux. La poudre fond au contact des surfaces métalliques chaudes et forme ainsi un dépôt dont l'épaisseur est fonction de la température du substrat et de sa durée d'immersion dans la poudre.

En trempage en lit fluidisé, la proportion préférée de résine époxy/sulfonamide par rapport au poids de polyamide est avantageusement comprise entre 1 et 5 %.

La granulométrie des poudres mises en oeuvre en lit fluidisé peut être comprise entre 10 et 1 000 µm et de préférence, entre 80 et 200 µm.

En général, l'épaisseur du revêtement peut être comprise entre 150 et 1000 µm, et de préférence entre 200 et 700 µm.

Les exemples suivants illustrent l'invention sans toutefois la limiter.

## EXEMPLE 1

### A - PREPARATION DE LA COMPOSITION DE POUDRE :

Dans 100 parties en poids d'acétone, on dissout 6 parties de résine époxy/sulfonamide aromatique de Mw = 1200 et de température de transition vitreuse Tg = 54°C.

Le composé époxyde est une résine dérivant de la réaction du bisphénol A et de l'épichlorhydrine.

Le poids d'équivalent époxyde de cette résine est égal à 172 g et sa teneur en hydroxyle est de 0,11 équivalent hydroxyle par kg de résine.

Le composé sulfonamide est constitué de para-toluène sulfonamide.

On ajoute ensuite 200 parties de poudre de polyamide-11 de viscosité inhérente égale à 0,9 et contenant 13 % en poids d'additifs divers dont 9,6 % de charge, 1,8 % de colorants et 1,6 % d'agents antioxydant, anticratère et réducteur. On agite le mélange en continu pendant 4 mn à température ambiante. On obtient une pâte que l'on sèche dans un four pendant 5 heures à 40°C afin d'éliminer l'acétone.

Le résidu sec est pulvérisé et tamisé à travers un tamis de maille 100 µm afin d'éliminer les grosses particules ne correspondant pas à la granulométrie des poudres électrostatiques.

### B - MISE EN OEUVRE :

La composition en poudre obtenue en A est déposée à température ambiante par projection électrostatique négative (a) ou positive (b) de 30 kV sur une plaque d'acier qui a préalablement subi un dégraissage suivi d'un grenaillage, la surface métallique étant à potentiel 0.

Le substrat ainsi revêtu passe dans un four maintenu à 220 ± 20°C où il séjourne de 5 à 15 minutes, puis est retiré du four et refroidi à l'air.

### C - CARACTERISTIQUES DU MATERIAU

1°) Le matériau est un composite comprenant successivement :
- une plaque d'acier dégraissé et grenaillé (épaisseur 1,5 mm)
- une couche de composition en poudre telle que décrite sous A d'épaisseur 100 µm.

2°) Le matériau décrit en C.1°) subit le test d'adhérence suivant, mis au point par la demanderesse :
- Avec un outil tranchant, on creuse dans le revêtement et jusqu'au métal 2 sillons parallèles distants de 10 mm. On creuse ensuite un autre sillon, perpendiculaire aux 2 premiers et les recoupant.
- Avec le même outil dont la largeur de coupe est de 10 mm, on pénètre dans le dernier sillon et on progresse entre les 2 sillons parallèles au niveau de l'interface métal/revêtement pour obtenir une languette de revêtement 10 mm.

On tire sur la languette pour essayer de séparer le revêtement du métal.

Les résultats sont classés de la façon suivante :
- classe 4 : le film ne peut être séparé du métal,
- classe 3 : le film se sépare irrégulièrement, la liaison est totale sur au moins 50 % de la surface,
- classe 2 : le film se sépare régulièrement, la force nécessaire à l'arrachement est élevée et se situe à la limite de la résistance du revêtement,
- classe 1 : le film se sépare de la surface avec facilité, la liaison est faible,
- classe 0 : le revêtement ne présente aucune liaison avec la surface.

3°) On apprécie visuellement l'étalement de la composition en poudre appliquée sur une plaque d'acier de 100 X 100 X 1 mm lors de sa fusion à 220°C, la plaque étant placée verticalement dans le four.

Un classement de 0 à 4 est effectué selon les observations suivantes :
- classe 0 : Plus de revêtement sur la plaque. Tout le revêtement fondu est tombé dans le four.
- classe 1 : La moitié au moins du revêtement est tombée lors de la fusion laissant environ la moitié de la surface de la plaque métallique à nu.
- classe 2 : Il y a quelques points de décrochement du revêtement (généralement aux bords et aux coins des plaques).
- classe 3 : Pas de décrochement. Défauts de mauvais mouillage : Bulles, gros cratères...
- classe 4 : Le revêtement est tendu et ne présente aucun défaut de mouillage ou d'étalement.

Les résultats d'adhérence et d'étalement obtenus par le matériau décrit en C.1°) sont répertoriés dans le Tableau I.

N.B. Les valeurs de classe semi-entières correspondent aux propriétés intermédiaires des classes qui l'encadrent. Par exemple : classe 1,5 correspond à des propriétés intermédiaires entre celles de la classe 1 et celles de la classe 2.

EXEMPLE 2

On renouvelle l'essai de l'exemple 1 en utilisant un mélange comprenant (en poids) :
- 100 parties d'acétone,
- 6 parties de résine époxy/sulfonamide de même caractéristiques que celles décrites dans l'exemple 1.A,
- 200 parties de poudre de polyamide-12 et de copolyamide 6/12 de viscosité inhérente 0,96 et contenant 12 % d'additifs divers dont 11,3 % de charge et 0,7 % d'agents antioxydant et réducteur.

On réalise ainsi un matériau composite comprenant successivement :
- une plaque d'acier phosphaté zinc d'épaisseur 1,5 mm,
- une couche de polyamide-12, 6/12 d'épaisseur 120 $\mu$m.

Le matériau décrit ci-dessus subit un test d'adhérence tel que défini en 1.C.2°) ainsi qu'une appréciation de l'étalement tel que définie en 1.C.3°).

Les résultats sont répertoriés dans le Tableau I.

EXEMPLE 3

A - PREPARATION DE LA COMPOSITION EN POUDRE

On ajoute 30 parties en poids de résine époxy-sulfonamide de caractéristiques identiques à celles de l'exemple 1.A. préalablement broyées à une granulométrie moyenne comprise entre 5 et 40 $\mu$m à 1 000 parties de PA-11 de viscosité inhérente 0,90 et contenant 13,8 % d'additifs dont 11,3 % de charges.

L'ensemble est malaxé et homogénéisé à une température comprise entre 200 et 220°C. Le temps de séjour dans l'appareil de malaxage est de l'ordre de 45 s.

Le produit obtenu, une fois refroidi à l'air ambiant, est broyé afin d'obtenir une granulométrie de poudre comprise entre 10 et 80 $\mu$m.

B - MISE EN OEUVRE

La composition de poudre obtenue sous A est projetée électrostatiquement sur une plaque d'acier dans les mêmes conditions que celles décrites dans l'exemple 1.B.

### C - CARACTERISTIQUES DU MATERIAU

1°) Le matériau est un composite comprenant successivement :
- une plaque d'acier dégraissé et grenaillé (épaisseur 1,5 mm).
- une couche de composition en poudre telle que décrite sous A d'épaisseur 100 μm.

2°) Le matériau décrit en C.1°) subit des tests d'adhérence et d'étalement tels que définis dans l'exemple 1.C.2°) et 1.C.3°).

Les résultats obtenus par le matériau décrit en C.1°) sont répertoriés dans le Tableau I.

### EXEMPLE 4

On renouvelle l'essai de l'exemple 3 en utilisant un mélange comprenant :
- 30 parties en poids de résine époxy/sulfonamide de caractéristiques identiques à celles de l'exemple 1.A préalablement broyée à une granulométrie comprise entre 5 et 40 μm à 1 000 parties de polyamide-12 de viscosité inhérente 0,95.

L'ensemble est malaxé et homogénéisé à une température comprise entre 180°C et 230°C. Le temps de séjour dans l'appareil de malaxage est de l'ordre de 45 s.

Le produit obtenu, une fois refroidi est broyé cryogéniquement afin d'obtenir une granulométrie de poudre comprise entre 10 et 80 μm.

On réalise ainsi un matériau composite comprenant successivement :
- une plaque d'acier dégraissé, grenaillé d'épaisseur 1,5 mm,
- une couche de polyamide-12 d'épaisseur 100 μm.

Le matériau ainsi décrit subit les tests d'adhérence et d'étalement définis en 1.C.2°) et 1.C.3°).

Les résultats sont répertoriés dans le Tableau I.

### EXEMPLE 5

### A - PREPARATION DE LA COMPOSITION EN POUDRE

Dans un mélangeur rapide de type HENSCHEL de contenance 70 l, on charge 20 kg de poudre de PA-11, 0,6 kg de résine époxy/sulfonamide broyée à une granulométrie moyenne de 10 μm et 0,02 kg d'agent de fluidisation.

Le PA-11 utilisé a une viscosité inhérente de 0,90 et il contient 13,8 % d'additifs dont 11,3 % de pigments et charges et 2,5 % d'agents antioxydant, anti-cratère et réducteur.

La résine époxy/sulfonamide a une masse moléculaire moyenne en poids Mw = 1200 et une température de transition vitreuse Tg = 54°C.

On brasse le mélange pendant 100 s à une vitesse de 830 trs/mn. La poudre obtenue peut être mise en oeuvre telle quelle.

### B - MISE EN OEUVRE

Le composition de poudre obtenue sous A est projetée électrostatiquement sur une plaque d'acier dans les mêmes conditions que celles décrites dans l'exemple 1.B.

### C - CARACTERISTIQUES DU MATERIAU

1°) Le matériau est un composite comprenant successivement :
- une plaque d'acier dégraissé et grenaillé (épaisseur 1,5 mm),
- une couche de composition en poudre telle que décrite sous A d'épaisseur 100 μm.

2°) Le matériau décrit en C.1°) subit les tests d'adhérence et d'étalement tels que définis dans l'exemple 1.C.2°) et 1.C.3°).

Les résultats obtenus par le matériau décrit en C. 1°) sont répertoriés dans le Tableau I.

### EXEMPLE 6

On projette électrostatiquement sur une plaque d'acier dégraissé et grenaillé dans les mêmes conditions que celles de l'exemple 5.B, une composition constituée de 1/3 en poids de polyamide-12 et de 2/3 de copolyamide 6/12, le PA-12 étant encapsulé dans le PA-6/12 et d'additifs divers dont 11,3 % de pigments, charges et 0,7 % d'agents antioxydant et réducteur et de 3 % de résine époxy/sulfonamide broyée selon les caractéristiques données dans l'exemple 5.

On réalise ainsi un matériau composite comprenant successivement :
- une plaque d'acier dégraissé et grenaillé d'épaisseur 1,5 mm,
- une couche de polyamide-12 et 6/12 d'épaisseur 100 μm.

Le matériau décrit ci-dessus subit les tests d'adhérence et d'étalement tels que définis en 1.C.2°) et 1.C.3°).

Les résultats obtenus sont réunis dans le Tableau I.

EXEMPLE 7 (COMPARATIF)

1°) On projette électrostatiquement sur une plaque d'acier dégraissé lisse dans les mêmes conditions que celles de l'exemple 1.B, une poudre de PA-11 de mêmes caractéristiques que celles décrites dans l'exemple 5.A et de granulométrie moyenne de 35 μm.

2°) Le matériau obtenu est un composite comprenant successivement :
- une plaque d'acier dégraissé lisse (épaisseur 1,5 mm),
- une couche de poudre de PA-11 d'épaisseur 100 μm.

3°) Le matériau décrit en 2°) subit un test d'adhérence tel que défini dans l'exemple 1.C.2°).

Les résultats d'adhérence sont réunis dans le Tableau I.

EXEMPLE 8 (COMPARATIF)

1°) On projette électrostatiquement sur une plaque d'acier dégraissé lisse dans les mêmes conditions que celles de l'exemple 1.B une composition en poudre à base de PA-11 de caractéristiques identiques à celles décrites dans l'exemple 5.A et contenant 13,5 % en poids de résinée phénoliques bloquées.

2°) Le matériau obtenu cet un composite comprenant successivement :
- une plaque d'acier dégraissé lisse (épaisseur 1,5 mm),
- une couche de composition de poudre telle que défini en 1°) d'épaisseur 100 μm.

3°) Le matériau décrit en 2°) subit les tests d'adhérence et d'étalement tels que définis dans l'exemple 1.C.2°) et 1.C.3°).

Les résultats sont réunie dans le Tableau I.

EXEMPLE 9

On renouvelle l'essai de l'exemple 5 dans les mêmes conditions en utilisant de la poudre de PA-11 de mêmes caractéristiques mais contenant des additifs différents :

A - La poudre utilisée contient :
- 99,25 % en poids de PA-11
- 0,75 % d'additifs (agents antioxydant, agent anti-cratère et agent de fluidisation).

B - La poudre utilisée, colorée en blanc, contient 68,8 % en poids de PA-11, 29,5 % de charges et 1,7 % d'additifs (agent antioxydant et agent anti-cratère).

C - La poudre utilisée, colorée en noir, contient 58,5 % en poids de PA-11, 39 % de charges, 0,5 % de colorant noir, 2 % d'additifs (agent antioxydant, agent anti-cratère, agent collant).

D - La poudre utilisée, colorée en gris, contient 85,3 % en poids de PA-11, 13,5 % de pigments et charges, et 1,2 % d'additifs (agent antioxydant, agent anti-cratère).

E - La poudre utilisée, colorée en jaune contient 67,4 % en poids de PA-11, 28,9 % de charges, 1,7 % de colorants et 2 % d'additifs (agent antioxydant, agent anti-cratère, agent réducteur).

Les résultats d'adhérence et d'étalement obtenue pour les essais A à E sont réunie dans le Tableau II.

EXEMPLE 10

On renouvelle l'essai de l'exemple 5 dans des conditions opératoires identiques en utilisant de la poudre de PA-11 colorée en gris, contenant 13 % en poids d'additifs dont 11,4 % de pigments et charges et 1,6 % d'agent antioxydant, anti-cratère et réducteur (10.A).

Les compositions suivantes contiennent également respectivement 0,2 kg (10.B), 0,6 kg (10.C) et 1 kg (10.D) de résine époxy/sulfonamide pour 20 kg de la poudre de PA-11, précédemment décrite.

L'influence de la quantité de résine époxy/sulfonamide sur les performances de la compositions de polyamide peut être appréciée dans le tableau III.

## EXEMPLE 11

A - La composition de poudre obtenue dans l'exemple 10 (Echantillon 10. C) est appliquée électrostatiquement sur divers substrats métalliques dans des conditions opératoires identiques à celles décrites dans l'exemple 1.B.

B - La composition de poudre obtenue dans l'exemple 6 est appliquée électrostatiquement dans les mêmes conditions qu'en A.

C - A titre de comparaison, on applique électrostatiquement et dans les mêmes conditions de la poudre de PA-11 de viscosité inhérente 0,90.

D - A titre de comparaison, on applique électrostatiquement et dans les mêmes conditions une composition de poudre à base de PA-11 de viscosité inhérente 0,90 et contenant 13,5 % en poids de résines phénoliques bloquées.

Les résultats d'adhérence et d'étalement obtenus pour les essais A à D sont réunis dans le tableau IV.

TABLEAU I

| EX | Classe d' | | Résine époxy/sulfonamide PA + additifs (% en poids) | Préparation de la poudre | Type et Polarité d'application |
|---|---|---|---|---|---|
| | Adhérence | Etalement | | | |
| 1a | 3 | 4 | 3 | dissolution | ES(−) |
| 1b | 3 | 4 | 3 | dissolution | EX(+) |
| 2a | 3 | 4 | 3 | dissolution | ES(−) |
| 2b | 3 | 4 | 3 | dissolution | ES(+) |
| 3a | 4 | 4 | 3 | malaxage à l'état fondu | ES(−) |
| 3b | 3 | 4 | 3 | malaxage à l'état fondu | ES(+) |
| 4a | 3 | 3 | 3 | malaxage à l'état fondu | ES(−) |
| 4b | 3 | 3 | 3 | malaxage à l'état fondu | ES(+) |
| 5a | 4 | 4 | 3 | mélange à sec | ES(−) |
| 5b | 4 | 4 | 3 | mélange à sec | ES(+) |
| 6a | 4 | 4 | 3 | mélange à sec | ES(−) |
| 6b | 4 | 4 | 3 | mélange à sec | ES(+) |
| 7a | 0 | 1 | 0 | | ES(−) |
| 7b | 0 | 1 | 0 | | ES(+) |
| 8a | 2 | 3 | 13,5 % de résines phénoliques | mélange à sec | ES(−) |
| 8b | 2 | 4 | 13,5 % de résines phénoliques | mélange à sec | ES(+) |

ES = projection électrostatique

## TABLEAU II

| EX | Classe d' | | Résine époxy/sulfonamide PA + additifs (% en poids) | % en poids d'additifs | Type et Polarité d'application |
|----|-----------|-----------|---------------------------------|-----------------------|--------------------------------|
|    | Adhérence | Etalement |                                 |                       |                                |
| 9A | 4 | 4 | 3 | 0,75 | ES (-) |
| 9A | 2 | 4 | 3 | 0,75 | ES (+) |
| 9B | 4 | 4 | 3 | 31,2 | ES (-) |
| 9B | 4 | 4 | 3 | 31,2 | ES (+) |
| 9C | 4 | 4 | 3 | 41,5 | ES (-) |
| 9C | 4 | 4 | 3 | 41,5 | ES (+) |
| 9D | 3 | 4 | 3 | 14,7 | ES (-) |
| 9D | 3 | 4 | 3 | 14,7 | ES (+) |
| 9E | 4 | 4 | 3 | 32,6 | ES (-) |
| 9E | 4 | 4 | 3 | 32,6 | ES (+) |

TABLEAU III

| EX | Classe d' | | Résine époxy/sulfonamide _____ PA + additifs (% en poids) | Type et Polarité d'appli- cation |
|---|---|---|---|---|
| | Adhérence | Etalement | | |
| 10A | 0 | 1 | 0 | ES (−) |
| 10A | 0 | 1 | 0 | ES (+) |
| 10B | 3 | 3 | 1 | ES (−) |
| 10B | 2 | 2 | 1 | ES (+) |
| 10C | 4 | 4 | 3 | ES (−) |
| 10C | 4 | 4 | 3 | ES (+) |
| 10D | 4 | 4 | 5 | ES (−) |
| 10D | 4 | 4 | 5 | ES (+) |

## TABLEAU IV

| SUBSTRAT | CLASSE D'ADHERENCE | | | | | | | |
|---|---|---|---|---|---|---|---|---|
| | EX 11.A | | EX 11.B | | EX 11.C | | EX 11 D | |
| | Type et polarité d'application | | | | | | | |
| | ES(+) | ES(-) | ES(+) | ES(-) | ES(+) | ES(-) | ES(+) | ES(-) |
| acier dégraissé $CF_2 = CHF$ | 1,5 | 2,5 | 4 | 4 | 0 | 0 | 2 | 2 |
| acier dégraissé grenaillé | 4 | 3,5 | 4 | 4 | 1 | 1 | 2 | 2,5 |
| acier phosphaté fer | 3 | 3,5 | 4 | 4 | 0 | 0 | 1 | 1 |
| acier phosphaté zinc | 3 | 4 | 4 | 4 | 0 | 0 | 1 | 1 |
| aluminium chromaté | 2 | 2,5 | 3,5 | 3,5 | 0 | 0 | 1 | 1 |

EXEMPLE 12

Dans une cuve de trempage en lit fluidisé, on place de la poudre de granulométrie moyenne comprise entre 80 et 200 µm.

Cette poudre est mise en fluidisation par arrivée de gaz comprimé sous la dalle poreuse de la cuve.

Le substrat d'acier grenaillé à revêtir est préchauffé dans un four ventilé jusqu'à ce qu'il atteigne une température d'environ 240-260°C.

On plonge le substrat dans le bain de poudre fluidisée pendant 4 à 6 s puis on le retire et le laisse refroidir à température ambiante.

On utilise de la poudre de PA-11, PA-11 coloré en blanc et PA-12 (respectivement ECHANTILLON A, B et C) contenant 0 % ou 3 % de résine époxy/sulfonamide de masse moléculaire moyenne en poids Mw = 1200 et de température de transition vitreuse Tg = 54°C.

On mesure l'adhérence des revêtements réalisés après 15 jours à l'air ambiant selon le test décrit dans l'exemple 1.C.2°).

Les résultats obtenus sont réunis dans le Tableau V.

## TABLEAU V

| résine époxy/sulfonamide | ADHERENCE | | |
|---|---|---|---|
| PA + additifs (% en poids) | EX 12.A | EX 12.B | EX 12.C |
| 0 | Classe 1 | Classe 1 | Classe 2 |
| 3 | Classe 3 | Classe 3 | Classe 3 |

## Revendications

1. Composition thermoplastique en poudre à base de polyamide et/ou de polyétheresteremide, caractérisée en ce qu'elle contient des résines époxy/sulfonamides.

2. Composition selon la revendication 1, caractérisée en ce que le rapport pondéral des résines époxy/sulfonsmides au polyamide et/ou au polyétheresteremide est compris entre 0,5 et 20 %, et de préférence entre 2 et 7 %.

3. Composition selon l'une quelconque des revendications 1 ou 2, caractérisée en ce qu'elle est à base de polyamide-11, de polyamide-12, seuls, en mélange ou copolymérisés.

4. Procédé de préparation d'une composition telle que décrite dans l'une des revendications 1 à 3, caractérisé en ce qu'il comprend les étapes suivantes :
   - on dissout les résines époxy/sulfonamides dans un solvant approprié,
   - puis on ajoute la poudre de polyamide et/ou de polyétheresteramide,
   - on évapore ensuite le solvant et on tamise ou broie le mélange obtenu à la granulométrie souhaitée.

5. Procédé de préparation d'une composition telle que décrite dans l'une des revendications 1 à 3, caractérisé en ce que les constituants de la composition sont malaxés à l'état fondu puis broyés à la granulométrie souhaitée.

6. Procédé de préparation d'une composition telle que décrite dans l'une des revendications 1 à 3, caractérisé en ce que les constituants de la composition, préalablement broyés sous forme de poudre, sont mélangés à sec.

7. Procédé de préparation d'une composition telle que décrite dans l'une des revendications 1 à 3, caractérisé en ce qu'il consiste à effectuer simultanémemt la polymérisation des monomères de polyamide et/ou de polyétheresteramide en présence des résines époxy/sulfonamides.

8. Utilisation d'une composition telle que décrite dans les revendications 1 à 3 de granulométrie de préférence comprise entre 5 μm et 1 mm, pour le revêtement de substrats métalliques selon une technique d'application de type poudre.

9. Utilisation d'une composition telle que décrite dans les revendications 1 à 3 et dont le rapport pondéral des résines époxy/sulfonamides au polyamide et/ou au polyétheresteramide est de préférence compris entre 1,5 et 7,5 % pour le revêtement de substrats métalliques par projection électrostatique.

10. Utilisation d'une composition telle que décrite dans les revendications 1 à 3 et dont le rapport pondéral des résines époxy/sulfonamides au polyamide et/ou au polyétheresteramide est de préférence compris entre 1 et 5 %, pour le revêtement de substrats métalliques de préférence grenaillés par trempage en lit fluidisé.

**Patentansprüche**

1. Pulverförmige thermoplastische Zuammmensetzung auf Basis von Polyamiden und/oder Polyetheresteramiden, dadurch gekennzeichnet, daß sie Epoxy/Sulfonamidharze enthält.

2. Verfahren nach Anspruch 1, dadurch gekennzeichnet, daß das Masseverhältnis der Epoxy/Sulfonamidharze zu den Polyamiden und/oder Polyetheresteramiden zwischen 0,5 und 20 %, vorzugsweise zwischen 2 und 7 % liegt.

3. Zusammensetzung nach einem der Ansprüche 1 oder 2, dadurch gekennzeichnet, daß sie aus Polyamid-11 oder Polyamid-12 allein, in Mischung oder copolymerisiert aufgebaut ist.

4. Verfahren zur Herstellung einer in einem der Ansprüche 1 bis 3 beschriebenen Zusammensetzung, dadurch gekennzeichnet, daß es aus folgenden Schritten besteht:
   - man löst die Epoxy/Sulfonamidharze in einem geeigneten Lösemittel,
   - gibt dann das Pulver von Polyamid und/oder Polyetheresteramid hinzu,
   - verdampft anschließend das Lösemittel und siebt oder zerkleinert die erhaltene Mischung bis zur gewünschten Korngrößenverteilung.

5. Verfahren zur Herstellung einer in einem der Ansprüche 1 bis 3 beschriebenen Zusammensetzung, dadurch gekennzeichnet, daß die Bestandteile der Zusammensetzung in geschmolzenem Zustand geknetet und dann bis zur gewünschten Korngrößenverteilung zerkleinert werden.

6. Verfahren zur Herstellung einer in einem der Ansprüche 1 bis 3 beschriebenen Zusammensetzung, dadurch gekennzeichnet, daß die vorher zu Pulver zerkleinerten Bestandteile der Zusammensetzung trocken gemischt werden.

7. Verfahren zur Herstellung einer in einem der Ansprüche 1 bis 3 beschriebenen Zusammensetzung, dadurch gekennzeichnet, daß man gleichzeitig die Polymerisation der Polyamid- und/oder Polyetheresteramidmonomeren in Gegenwart der Epoxy/Sulfonamidharze durchführt.

8. Verwendung einer in einem der Ansprüche 1 bis 3 beschriebenen Zuammmensetzung mit einer Korngrö-ßenverteilung vorzugsweise zwischen 5 µm und 1 mm zur Beschichtung metallischer Unterlagen mittels einer Technik zur Aufbringung von Pulvern.

9. Verwendung einer in den Ansprüchen 1 bis 3 beschriebenen Zusammensetzung, deren Gewichtsverhältnis von Epoxy/Sulfonamidharzen zu den Polyamiden und/oder Polyetheresteramiden vorzugsweise zwischen 1,5 und 7,5 % liegt, zur Beschichtung metallischer Unterlagen durch elektrostatisches Aufspritzen.

10. Verwendung einer in den Ansprüchen 1 bis 3 beschriebenen Zusammensetzung, deren Gewichtsverhältnis von Epoxy/Sulfonamidharzen zu den Polyamiden und/oder Polyetheresteramiden vorzugsweise zwischen 1 und 5 % liegt, zur Beschichtung metallischer Unterlagen, vorzugsweise Granalien, durch Eintauchen in ein Fließbett.

**Claims**

1. Powder thermoplastic composition based on polyamide and/or polyetheresteramide, characterized in that it contains epoxy/sulphonamide resins.

2. Composition according to Claim 1, characterized in that the weight ratio of the epoxy/sulphonamide resins to the polyamide and/or to the polyetherester-amide is between 0.5 and 20 % and preferably between 2 and 7 %.

3.  Composition according to either of Claims 1 and 2, characterized in that it is based on polyamide 11, polyamide 12, by themselves, mixed or copolymerized.

4.  Process for the preparation of a composition such as described in one of Claims 1 to 3, characterized in that it comprises the following stages:
    - the epoxy/sulphonamide resins are dissolved in a suitable solvent,
    - the polyamide and/or polyetheresteramide powder is then added,
    - the solvent is evaporated off next and the mixture obtained is screened or milled to the desired particle size.

5.  Process for the preparation of a composition such as described in one of Claims 1 to 3, characterized in that the constituents of the composition are melt-blended and are then milled to the desired particle size.

6.  Process for the preparation of a composition such as described in one of Claims 1 to 3, characterized in that the constituents of the composition, which are milled into powder form beforehand, are mixed dry.

7.  Process for the preparation of a composition such as described in one of Claims 1 to 3, characterized in that it consists in simultaneously performing the polymerization of the monomers of polyamide and/or of polyetheresteramide in the presence of the epoxy/sulphonamide resins.

8.  Use of a composition such as described in Claims 1 to 3 with a particle size preferably between 5 $\mu$m and 1 mm for coating metal substrates according to an application technique of the powder type.

9.  Use of a composition such as described in Claims 1 to 3 and in which the weight ratio of the epoxy/sulphonamide resins to the polyamide and/or to the polyetheresteramide is preferably between 1.5 and 7.5 % for coating metal substrates by electrostatic spraying.

10. Use of a composition such as described in Claims 1 to 3 and in which the weight ratio of the epoxy/sulphonamide resins to the polyamide and/or to the polyetheresteramide is preferably between 1 and 5 % for coating metal, preferably shot-blasted, substrates by fluidized bed dip-coating.